# EUROPÄISCHE PATENTSCHRIFT

(11) **EP 1 752 243 B1**
(45) Veröffentlichungstag und Bekanntmachung des Hinweises auf die Patenterteilung: **30.01.2008**
(21) Anmeldenummer: 06118210.1
(22) Anmeldetag: 31.07.2006
(51) Int. Cl.: B23B 49/00, G01R 31/11

(54) **Werkzeugmaschine mit Eindringtiefenmessung für Werkzeuge**
Machine tool comprising depth measurement for tools
Machine-outil avec mesure de profondeur de pénétration des outils

(30) Priorität: 11.08.2005 DE 102005038090
(43) Veröffentlichungstag der Anmeldung: 14.02.2007
(73) Patentinhaber: HILTI Aktiengesellschaft, 9494 Schaan (LI)
(72) Erfinder: Würsch, Christoph, 9470 Werdenberg (CH)
(74) Vertreter: Wildi, Roland

(56) Entgegenhaltungen:
- DE-A1- 2 838 968
- DE-A1- 3 615 874
- US-A- 3 990 805
- US-A- 4 739 276
- US-A1- 2002 129 948

## Beschreibung

Die Erfindung bezeichnet eine Werkzeugmaschine mit Eindringtiefenmessung für Werkzeuge in das bearbeitete Material, vorzugsweise eine Bohrtiefenmessung eines ein Sackloch bohrenden Bohrwerkzeugs, sowie deren Verwendung als Tiefenanschlag bei Handwerkzeugmaschinen wie Bohrhämmern oder Kernbohrmaschinen, sowie ein zugeordnetes Messverfahren.

Üblicherweise wird die Eindringtiefe eines Werkzeugs in das bearbeitete Material über eine Hilfsmessstrecke gemessen. So weist eine Handwerkzeugmaschine üblicherweise ein mechanisches, akustisches oder optisches Tiefenmesssystem auf, mit dem der Abstand eines maschinenfesten Referenzpunktes zur Oberfläche des bearbeiteten Materials direkt messbar ist, über den mittels der vorbekannten Werkzeuglänge zum Referenzpunkt die Eindringtiefe mittelbar über Subtraktion bestimmbar ist. Bei Handwerkzeugmaschinen wird beim Erreichen einer vorgegebenen Eindringtiefe durch einen mechanischen Anschlag (Tiefenanschlag) oder durch ein Unterbrechen des Hauptantriebs ein tieferes Eindringen des Werkzeugs verhindert.

Am meisten verbreitet ist bei Handwerkzeugmaschinen ein sich längs der Werkzeugachse erstreckender, zu dieser beabstandet angeordneter stabförmiger Tiefenanschlag, der bezüglich des maschinenfesten Referenzpunktes axial verschiebbar festlegbar und oft mit einer Entfernungsmessskala versehen ist. Derartige mechanische Tiefenanschläge schränken den axialen Rotationsfreiheitsgrad ein und können verbiegen. Zudem verlangt das Einstellen des mechanischen Tiefenanschlags etwas Geschick, da eigentlich drei Hände benötigt würden, eine zum Halten des Massstabs, eine zum Öffnen des Handgriffs und eine zum Halten des Gerätes, wobei letztere nur vermieden wird, wenn die Handwerkzeugmaschine auf den Boden abgelegt oder mit dem Körper gegen eine Wand gedrückt wird.

Nach der DE2838968 werden für elektronische Tiefenanschläge für Handwerkzeugmaschinen verschiedene Arten zur laufzeitbasierten Entfernungsmessung vorgeschlagen, insbesondere basierend auf Messmethoden unter Verwendung von Ultraschall, elektromagnetischen Wellen oder Licht, das vom Referenzpunkt parallel beabstandet (d.h. eine Parallaxe aufweisend) zur Werkzeugachse abgestrahlt und jeweils an der Oberfläche des bearbeiteten Materials reflektiert wird. Ein von der Lotrechten der Oberfläche abweichender Neigungswinkel der Werkzeugachse führt prinzipiell zu einem Messfehler.

Zudem ist bekannt, dass zur Ortung von Fehlerstellen in sehr langen Datenübertragungskabeln spezielle Kabeltester verwendet werden, die auf dem Messprinzip der Zeitbereichsreflektometrie mit sich längs des Kabels ausbreitenden hochfrequenten elektromagnetischen Welle basieren bspw. nach der US4739276.

Die Aufgabe besteht in der Realisierung einer parallaxenfreien Eindringtiefenmessung für Werkzeuge.

Die Aufgabe wird im Wesentlichen durch die Merkmale der unabhängigen Ansprüche gelöst. Vorteilhafte Weiterbildungen ergeben sich aus den Unteransprüchen.

So weist eine Werkzeugmaschine zum Antrieb eines zumindest axial in ein zu bearbeitendes Material eindringenden Werkzeugs einen zur Anregung und Erfassung einer sich axial längs des Werkzeugs ausbreitenden, hochfrequenten elektromagnetischen Welle geeigneten Wandler auf, der mit einem Signalprozessormittel verbunden ist, welches zur auf hochfrequenten elektromagnetischen Wellen basierenden Bestimmung der Eindringtiefe des Werkzeugs im Material ausgebildet ist.

Durch den Wandler und das Signalprozessormittel ist basierend auf einer sich direkt längs des Werkzeugs ausbreitenden hochfrequenten elektromagnetischen Welle eine parallaxenfreie Eindringtiefenmessung für Werkzeuge möglich. Dies wird nachfolgend anhand einiger physikalischer Grundlagen zu verdeutlichen versucht.

Das axial in ein zu bearbeitendes Material eindringende Werkzeug stellt selbst den Wellenleiter der elektromagnetischen Welle dar. Bezüglich axial homogener Längenbereiche wird die Welle im Wesentlichen durch die Ausbreitungsgeschwindigkeit und den Wellenwiderstand (Impedanz) charakterisiert, welcher wesentlich vom dem den Wellenleiter umgebenden Dielektrikum abhängt. Dabei kann die freie Werkzeuglänge bei einem zylinderförmigen Werkzeug als freiliegender Wellenleiter, bei einem zweigängigen Bohrerwendel als zwei parallele Wellenleiter und der axiale Längenabschnitt des in der Werkzeugmaschine geführten Werkzeugs als koaxialer Wellenleiter näherungsweise betrachtet werden. An dem freien Werkzeugende kommt es auf Grund des Sprungs des Wellenwiderstandes auf Unendlich zu einer Totalreflektion der Welle. Da an der Oberfläche des zu bearbeitenden Materials ebenfalls eine Änderung des Dielektrikums (von [epsilon] = 1 für Luft auf [epsilon] = 3..5 für mineralische Untergründe) und somit des Wellenwiderstandes erfolgt, wird dort die Welle zumindest teilweise reflektiert. Die elektrische Feldstärke der Welle kann am Wandler über eine Spannungsmessung erfasst werden. Somit kann basierend auf den vom Wandler erfassten Spannungssignalen der Reflektionen des freien Werkzeugendes und der Oberfläche die Eindringtiefe durch entsprechende Signalverarbeitung des Werkzeugs bestimmt werden.

Vorteilhaft ist der Wandler als Koaxialleitung ausgebildet, deren länglicher Innenleiter zumindest teilweise durch das hochfrequent leitfähige Werkzeug und deren hülsenförmiger Aussenleiter zumindest teilweise durch ein hochfrequent leitfähiges Gehäuse der Werkzeugmaschine ausgebildet ist, die zueinander hochfrequent isoliert sind, wodurch ein Koaxialleitungsabschnitt konstanten Wellenwiderstandes ausgebildet wird damit sich die hochfrequenten elektromagnetischen Wellen innerhalb der Werkzeugmaschine reflektionsarm längs des Werkzeug ausbreiten können.

Vorteilhaft bildet der Aussenleiter werkzeugseitig stirnseitig eine radiale Aufweitung auf, wodurch werkzeugseitig stirnseitig eine Anpassung des Wellenwiderstandes an den Vakuumwellenwiderstand erfolgt, damit sich die hochfrequenten elektromagnetischen Wellen reflektionsarm von der Werkzeugmaschine ablösen und längs des freiliegenden Werkzeugs ausbreiten können. Analog erfolgt eine Anpassung bei den einlaufenden, reflektierten Wellen.

Vorteilhaft weist der als Koaxialleitung ausgebildete Wandler sowohl am Innenleiter als auch am Aussenleiter je einen hochfrequent leitfähigen, bspw. galvanisch oder kapazitiv, Speiseanschluss im maschinenseitigen axialen Endbereich des in der Werkzeugmaschine aufgenommenen Werkzeugs auf, wodurch die Speisung im Bereich des Spannungsmaximums erfolgt.

Vorteilhaft ist der Speiseanschluss des Innenleiters frei drehbar ausgebildet, bspw. über ein leitfähiges Drehlager oder einen HF-Drehkoppler, wodurch auch ein drehend angetriebenes Werkzeug als Wellenleiter gespeist werden kann.

Vorteilhaft weist das Signalprozessormittel einen Zeitgeber, einen zur Abgabe von Spannungsimpulsen mit Anstiegszeiten kleiner 120 ps geeigneten Hochfrequenzimpulsgenerator, einen zur Erfassung von Spannungssignalen mit Samplingzeiten kleiner 12 ps geeigneten schnellen Messeingang und ein Rechenmittel auf, das einen steuernden Algorithmus beinhaltet, welcher ein Laufzeitmodul zur Bestimmung der Zeitdifferenz zwischen zumindest zwei vom Messeingang selektierter Spannungsimpulse aufweist, wodurch eine Distanzmessung über eine direkte Laufzeitmessung von pulsförmigen Wellen entlang des Werkzeugs realisiert ist.

Vorteilhaft weist das Signalprozessormittel bzw. das Laufzeitmodul ein zur Differentiation der Spannungssignale geeignetes (analoges oder numerisches) Differentiationsmittel auf, wodurch die zeitlich zu detektierenden Sprünge in den Spannungssignalen in einfach und robust detektierbare Signalspitzen (positive und negative) transformiert werden.

Vorteilhaft wird im zugeordneten Messverfahren die Zeitdifferenz zwischen der ersten positiven und der ersten negativen Signalspitze gemessen, wodurch die Laufzeitdifferenz der an der Oberfläche (positive Signalspitze) und der an dem Werkzeugende (negative Signalspitze) reflektierten Welle gemessen wird, die proportional zur Eindringtiefe ist.

Alternativ vorteilhaft weist das Signalprozessormittel einen für stationäre Schwingungen mit Frequenzen grösser 8 GHz geeigneten frequenzveränderlichen Hochfrequenzoszillator, einen Demodulator zur Amplitudendemodulation des Hochfrequenzsignals, einen zur Erfassung des Amplitudensignals des Hochfrequenzsignals geeigneten Messeingang und ein Rechenmittel auf, das einen steuernden Algorithmus beinhaltet, welcher ein Stehwellenmodul zur Bestimmung des hochfrequenzspezifischen Stehwellenverhältnisses sowie ein Distanzmodul zur Bestimmung einer Distanz basierend auf zumindest zwei verschiedenen hochfrequenzspezifischen Stehwellenverhältnissen aufweist, wodurch eine Distanzmessung indirekt über eine, von der Phasenlage sich überlagernder eingespeister und reflektierter Wellen abhängigen, Stehwellenverhältnismessung bei verschiedenen Frequenzen realisiert ist.

Vorteilhaft wird im zugeordneten Messverfahren zur Bestimmung der Eindringtiefe eines zumindest axial in ein zu bearbeitendes Material eindringenden Werkzeugs in einem ersten Schritt bei freiliegendem Werkzeug eine Distanzmessung bis zum freien Werkzeugende und in einem zweiten Schritt bei in das bearbeitete Material eindringendem Werkzeug eine Distanzmessung bis zur Oberfläche des bearbeiteten Materials durchgeführt, wodurch statt absoluter Distanzmessungen relative Distanzmessungen hinreichend sind, da sich die Eindringtiefe aus der Differenz zweier Distanzen ergibt.

Die Erfindung wird bezüglich eines vorteilhaften Ausführungsbeispiels näher erläutert mit:
Fig. 1 als Werkzeugmaschine mit Eindringtiefenmessung
Fig. 2 als Einzelheit im Längsschnitt
Fig. 3 als alternatives Signalprozessormittel

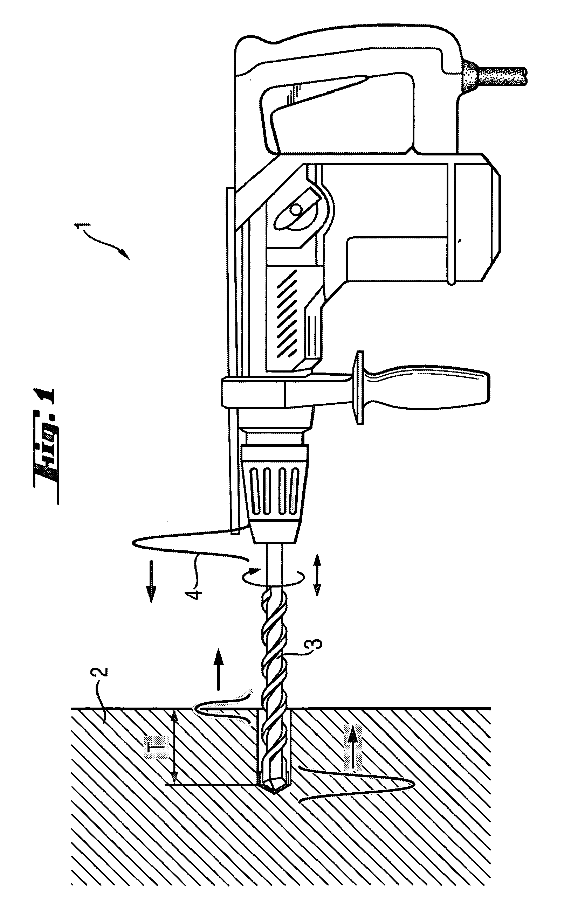

Nach Fig. 1 weist eine Werkzeugmaschine 1 zum drehenden und schlagenden Antrieb eines axial in ein zu bearbeitendes Material 2 eindringenden Werkzeugs 3 in Form eines Bohrmeissels einen zur Anregung und Erfassung einer sich axial längs des Werkzeugs 3 ausbreitenden, hochfrequenten elektromagnetischen, pulsförmigen Welle 4 geeigneten Wandler 5 (Fig. 2) auf, der mit einem Signalprozessormittel 6 (Fig. 2) verbunden ist, welches zur auf hochfrequenten elektromagnetischen Wellen 4 basierenden Bestimmung der Eindringtiefe T des Werkzeugs 3 im Material 4 ausgebildet ist.

Nach Fig. 2 ist der Wandler 5 als Koaxialleitung ausgebildet, deren länglicher Innenleiter zumindest teilweise durch das hochfrequent leitfähige Werkzeug 3 und deren hülsenförmiger Aussenleiter zumindest teilweise durch ein hochfrequent leitfähiges Gehäuse 7 der Werkzeugmaschine 1 ausgebildet ist, die über ein Isolatormaterial 8 aus Keramik zueinander hochfrequent isoliert sind. Der Aussenleiter bildet werkzeugseitig stirnseitig eine radiale Aufweitung 9 in Form eines Hornstrahlers auf. Der Wandler 5 weist am frei drehbar ausgebildeten Innenleiter einen als ein leitfähiges Drehlager 10 ausgebildeten galvanisch hochfrequent leitfähigen ersten Speiseanschluss 11a und einen am Aussenleiter hochfrequent leitfähigen zweiten Speiseanschluss 11 b auf, die im maschinenseitigen axialen Endbereich E des in der Werkzeugmaschine 1 in Form eines nur teilweise dargestellten elektropneumatischen Bohrhammers aufgenommenen Werkzeugs 3 angeordnet sind. Das Signalprozessormittel 6 weist einen Zeitgeber 12 für die Zeit t, einen zur Abgabe von Spannungsimpulsen mit Anstiegszeiten von 50 ps geeigneten Hochfrequenzimpulsgenerator 13, einen zur Erfassung von Spannungssignalen v(t) mit Samplingzeiten von 5 ps geeigneten schnellen Messeingang 14 in Form eines Pulsmischers M (sequentielles Sampling, bspw. realisiert mit einer stroboskopisch abgetasteten Diodenbrücke), eines nachgeschalteten Tiefpassfilters F und eines nachgeschalteten Analog-Digital-Wandlers A/D und ein Rechenmittel 15 in Form eines Mikrocontrollers [mü]C auf, das einen steuernden Algorithmus 16 zur Bestimmung der Eindringtiefe T beinhaltet, welcher ein Laufzeitmodul 17 zur Bestimmung der Zeitdifferenz [Delta]t zwischen zwei vom Messeingang selektierter Spannungsimpulse der pulsförmigen Wellen 4 aufweist. Dabei weist das Laufzeitmodul 17 ein zur Differentiation der Spannungssignale v(t) geeignetes numerisches Differentiationsmittel 18 auf, welches im zugeordneten Messverfahren die Zeitdifferenz [Delta]t zwischen der ersten positiven und der ersten negativen Signalspitze misst, die proportional zur Eindringtiefe T ist, wobei c die Vakuumlichtgeschwindigkeit, [mü] die Permeabilität und [epsilon] die Dielektrizität ist.

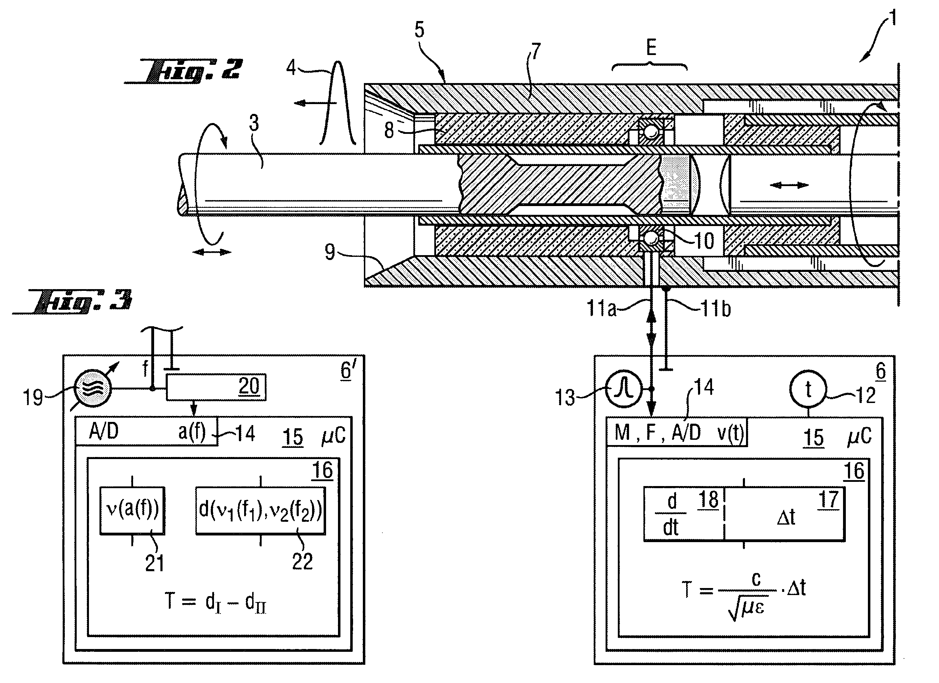

Nach der in Fig. 3 dargestellten Alternative weist im Unterschied zur Fig. 2 das Signalprozessormittel 6' einen für stationäre Schwingungen mit Frequenzen f grösser 8 GHz geeigneten, frequenzveränderlichen Hochfrequenzoszillator 19, einen Demodulator 20 zur Amplitudendemodulation des Hochfrequenzsignals f zu einem Amplitudensignals a(f), einen zur Erfassung des Amplitudensignals a(f) des Hochfrequenzsignals f geeigneten Messeingang 14 in Form eines Analog-Digital-Wandlers A/D und ein Rechenmittel 15 in Form eines Mikrocontrollers [mü]C auf, das einen steuernden Algorithmus 16 zur Bestimmung der Eindringtiefe T beinhaltet, welcher ein Stehwellenmodul 21 zur Bestimmung des hochfrequenzspezifischen Stehwellenverhältnisses [nü] sowie ein Distanzmodul 22 zur Bestimmung einer (absoluten) Distanz d basierend auf zumindest zwei verschiedenen hochfrequenzspezifischen Stehwellenverhältnissen [nü]₁, [nü]₂ bei verschiedenen Frequenzen f₁, f₂ aufweist. Im zugeordneten Messverfahren wird zur Bestimmung der Eindringtiefe T des axial in das zu bearbeitendes Material 2 (Fig. 1) eindringenden Werkzeugs 3 (Fig. 1) in einem ersten Schritt bei freiliegendem Werkzeug 3 (Fig. 1) eine Distanzmessung I bis zum freien Werkzeugende und in einem zweiten Schritt bei in das bearbeitete Material 2 (Fig. 1) eindringendem Werkzeug 3 (Fig. 1) eine Distanzmessung II bis zur Oberfläche des bearbeiteten Materials 2 (Fig. 1) durchgeführt. Die Eindringtiefe T ergibt sich aus der Differenz der beiden Distanzen d_{I}, d_{II}.

## Patentansprüche

1. Werkzeugmaschine zum Antrieb eines zumindest axial in ein zu bearbeitendes Material (2) eindringenden Werkzeugs (3), mit einem Signalprozessormittel (6, 6'), **dadurch gekennzeichnet, dass** ein zur Anregung und Erfassung einer sich axial längs des Werkzeugs (3) ausbreitenden, hochfrequenten elektromagnetischen Welle (4) geeigneter Wandler (5) vorhanden ist, der mit dem Signalprozessormittel (6, 6') verbunden ist, welches zur auf hochfrequenten elektromagnetischen Wellen (4) basierenden Bestimmung der Eindringtiefe (T) des Werkzeugs (3) im Material (2) ausgebildet ist.

2. Werkzeugmaschine nach Anspruch 1, **dadurch gekennzeichnet, dass** der Wandler (5) als Koaxialleitung ausgebildet ist, deren länglicher Innenleiter zumindest teilweise durch das hochfrequent leitfähige Werkzeug (3) und deren hülsenförmiger Aussenleiter zumindest teilweise durch ein hochfrequent leitfähiges Gehäuse (7) der Werkzeugmaschine ausgebildet ist, die zueinander hochfrequent isoliert sind.

3. Werkzeugmaschine nach Anspruch 2, **dadurch gekennzeichnet, dass** der Aussenleiter werkzeugseitig stirnseitig eine radiale Aufweitung (9) aufweist.

4. Werkzeugmaschine nach Anspruch 2 oder 3, **dadurch gekennzeichnet, dass** der als Koaxialleitung ausgebildete Wandler (5) sowohl am Innenleiter als auch am Aussenleiter je einen hochfrequent leitfähigen Speiseanschluss (11a, 11 b) im maschinenseitigen axialen Endbereich des in der Werkzeugmaschine aufgenommenen Werkzeugs (3) aufweist.

5. Werkzeugmaschine nach Anspruch 4, **dadurch gekennzeichnet, dass** der Speiseanschluss (11a) des Innenleiters frei drehbar ausgebildet ist.

6. Werkzeugmaschine nach einem der Ansprüche 1 bis 5, **dadurch gekennzeichnet, dass** das Signalprozessormittel (6) einen Zeitgeber (12), einen zur Abgabe von Spannungsimpulsen mit Anstiegszeiten kleiner 120 ps geeigneten Hochfrequenzimpulsgenerator (13), einen zur Erfassung von Spannungssignalen mit Samplingzeiten kleiner 12 ps geeigneten schnellen Messeingang (14) und ein Rechenmittel (15) aufweist, das einen steuernden Algorithmus (16) beinhaltet, welcher ein Laufzeitmodul (17) zur Bestimmung der Zeitdifferenz ([Delta]t) zwischen zumindest zwei vom Messeingang (14) selektierter Spannungsimpulse aufweist.

7. Werkzeugmaschine nach Anspruch 6, **dadurch gekennzeichnet, dass** ein zur Differentiation der Spannungssignale in Signalspitzen geeignetes Differentiationsmittel (18) vorhanden ist.

8. Werkzeugmaschine nach einem der Ansprüche 1 bis 5, **dadurch gekennzeichnet, dass** das Signalprozessormittel (6') einen für stationäre Schwingungen mit Frequenzen grösser 8 GHz geeigneten frequenzveränderlichen Hochfrequenzoszillator (19), einen Demodulator (20) zur Amplitudendemodulation des Hochfrequenzsignals, einen zur Erfassung des Amplitudensignals des Hochfrequenzsignals geeigneten Messeingang (14) und ein Rechenmittel (15) aufweist, das einen steuernden Algorithmus (16) beinhaltet, welcher ein Stehwellenmodul (21) zur Bestimmung des hochfrequenzspezifischen Stehwellenverhältnisses sowie ein Distanzmodul (22) zur Bestimmung einer Distanz (d) basierend auf zumindest zwei verschiedenen hochfrequenzspezifischen Stehwellenverhältnissen aufweist.

9. Messverfahren zur Bestimmung der Eindringtiefe (T) eines zumindest axial in ein zu bearbeitendes Material eindringenden Werkzeugs (3) mit einer Werkzeugmaschine nach einem der Ansprüche 1 bis 8, **dadurch gekennzeichnet, dass** in einem ersten Schritt bei freiliegendem Werkzeug (3) eine Distanzmessung bis zum freien Werkzeugende und in einem zweiten Schritt bei in das bearbeitete Material (2) eindringendem Werkzeug (3) eine Distanzmessung bis zur Oberfläche des bearbeiteten Materials (2) durchgeführt wird.

10. Messverfahren zur Bestimmung der Eindringtiefe (T) eines zumindest axial in ein zu bearbeitendes Material (2) eindringenden Werkzeugs (3) mit einer Werkzeugmaschine nach Anspruch 7, **dadurch gekennzeichnet, dass** die Zeitdifferenz ([Delta]t) zwischen der ersten positiven und der ersten negativen Signalspitze gemessen wird.

## Claims

1. Machine tool for driving a tool (3) penetrating at least axially into a material (2) to be machined, comprising a signal processing means (6, 6'), **characterised in that** a transducer (5) suitable for exciting and detecting a high frequency electromagnetic wave (4) propagating axially along the tool (3) is provided, said transducer being connected to the signal processing means (6, 6') which is designed for determining the penetration depth (T) of the tool (3) in the material (2) based on high frequency electromagnetic waves (4).

2. Machine tool according to claim 1, **characterised in that** the transducer (5) is constructed as a coaxial conductor whose elongated inner conductor is at least partially formed by the high-frequency conductive tool (3) and whose sleeve-shaped outer conductor is formed at least partially by a high-frequency conductive housing (7) of the machine tool, each being insulated from one another with respect to high frequency signals.

3. Machine tool according to claim 2, **characterised in that** the outer conductor has a radial widening (9) on the end side towards the tool.

4. Machine tool according to claim 2 or 3, **characterised in that** the transducer (5) constructed as a coaxial conductor has a high-frequency conductive feed connection (11a, 11b), respectively, on the inner conductor and on the outer conductor in the axial end region of the tool (3) towards the machine, said end region being accommodated in the machine tool.

5. Machine tool according to claim 4, **characterised in that** the feed connection (11a) of the inner conductor is constructed freely rotatable.

6. Machine tool according to one of the claims 1 to 5, **characterised in that** the signal processing means (6) has a timing generator (12), a high frequency pulse generator (13) suitable for supplying voltage pulses with rise times of less than 120 ps, a fast measuring input (14) suitable for detecting voltage signals with sampling times of less than 12 ps and a computing means (15) which contains a controlling algorithm (16) which has a running time module (17) for determining the time difference (Δt) between at least two voltage pulses selected by the measuring input (14) .

7. Machine tool according to claim 6, **characterised in that** a differentiation means (18) suitable for differentiating the voltage signals into signal peaks is provided.

8. Machine tool according to one of the claims 1 to 5, **characterised in that** the signal processing means (6') has a variable-frequency high frequency oscillator (19) suitable for standing wave oscillations with frequencies of greater than 8 GHz, a demodulator (20) for amplitude modulation of the high frequency signal, a measuring input (14) suitable for detecting the amplitude signal of the high frequency signal and a computing means (15) which contains a controlling algorithm (16) which comprises a standing wave module (21) for determining the high frequency-specific standing wave ratio, and a distance module (22) for determining a distance (d) based on at least two different high-frequency specific standing wave ratios.

9. Measuring method for determining the penetration depth (T) of a tool (3) penetrating at least axially into a material to be machined, using a machine tool according to one of the claims 1 to 8, **characterised in that**, in a first step with the tool (3) free, a distance measurement to the free tool end is carried out and, in a second step, with the tool (3) penetrating into the material (2) being machined, a distance measurement to the surface of the material (2) being machined is carried out.

10. Measuring method for determining the penetration depth (T) of a tool (3) penetrating at least axially into a material (2) to be machined, using a machine tool according to claim 7, **characterised in that** the time difference (Δt) between the first positive signal peak and the first negative signal peak is measured.

## Revendications

1. Machine-outil pour l'entraînement d'un outil (3) pénétrant au moins axialement dans un matériau à travailler (2), comprenant un moyen de processeur de signal (6, 6'), **caractérisée en ce qu'**il est prévu un convertisseur (5) qui est apte à exciter et détecter une onde électromagnétique à haute fréquence (4) se propageant axialement le long de l'outil (3) et qui est relié au moyen de processeur de signal (6, 6'), lequel est conçu pour déterminer la profondeur de pénétration (T) de l'outil (3) dans le matériau (2) sur la base d'ondes électromagnétiques à haute fréquence (4).

2. Machine-outil selon la revendication 1, **caractérisée en ce que** le convertisseur (5) est conformé en conduite coaxiale dont le conducteur intérieur allongé est formé au moins partiellement par l'outil conducteur à haute fréquence (3) et dont le conducteur extérieur en forme de manchon est formé au moins partiellement par un carter conducteur à haute fréquence (7) de la machine-outil, lesquels sont isolés l'un par rapport à l'autre sur le plan des hautes fréquences.

3. Machine-outil selon la revendication 2, **caractérisée en ce que** le conducteur extérieur comporte frontalement, côté outil, un évasement radial (9).

4. Machine-outil selon la revendication 2 ou 3, **caractérisée en ce que** le convertisseur (5) conformé en conduite coaxiale comporte aussi bien sur le conducteur intérieur que sur le conducteur extérieur une connexion d'alimentation conductrice à haute fréquence (11a, 11b) dans la zone d'extrémité axiale, côté machine, de l'outil (3) logé dans la machine-outil.

5. Machine-outil selon la revendication 4, **caractérisée en ce que** la connexion d'alimentation (11a) du conducteur intérieur est conçue à libre rotation.

6. Machine-outil selon une des revendications 1 à 5, **caractérisée en ce que** le moyen de processeur de signal (6) comporte un générateur d'horloge (12), un générateur d'impulsions à haute fréquence (13) apte à fournir des impulsions de tension avec des temps de montée inférieurs à 120 ps, une entrée de mesure rapide (14) apte à détecter des signaux de tension avec des temps d'échantillonnage inférieurs à 12 ps et un moyen de calcul (15) renfermant un algorithme de commande (16), lequel comporte un module de temps d'exécution (17) pour déterminer la différence de temps ([delta]t) entre au moins deux impulsions de tension sélectionnées par l'entrée de mesure (14).

7. Machine-outil selon la revendication 6, **caractérisée en ce qu'**il est prévu un moyen de différenciation (18) apte à différencier les signaux de tension dans des pics de signaux.

8. Machine-outil selon une des revendications 1 à 5, **caractérisée en ce que** le moyen de processeur de signal (6') comporte un oscillateur à haute fréquence à fréquence variable (19) apte à générer des oscillations stationnaires à des fréquences supérieures à 8 GHz, un démodulateur (20) pour la démodulation d'amplitude du signal à haute fréquence, une entrée de mesure (14) apte à détecter le signal d'amplitude du signal à haute fréquence, et un moyen de calcul (15) renfermant un algorithme de commande (16), lequel comporte un module d'ondes stationnaires (21) pour déterminer le rapport d'ondes stationnaires spécifique aux hautes fréquences ainsi qu'un module de distance (22) pour déterminer une distance (d) sur la base d'au moins deux différents rapports d'ondes stationnaires spécifiques aux hautes fréquences.

9. Procédé de mesure pour déterminer la profondeur de pénétration (T) d'un outil (3) pénétrant au moins axialement dans un matériau à travailler à l'aide d'une machine-outil selon une des revendications 1 à 8, **caractérisé en ce que**, dans une première étape, l'outil (3) étant apparent, une mesure de distance est effectuée jusqu'à l'extrémité libre de l'outil et, dans une seconde étape, l'outil (3) pénétrant dans le matériau travaillé (2), une mesure de distance est effectuée jusqu'à la surface du matériau travaillé (2) .

10. Procédé de mesure pour déterminer la profondeur de pénétration (T) d'un outil (3) pénétrant au moins axialement dans un matériau à travailler (2) à l'aide d'une machine-outil selon la revendication 7, **caractérisé en ce que** la différence de temps ([delta]t) entre le premier pic de signal positif et le premier pic de signal négatif est mesurée.
